# EUROPEAN PATENT SPECIFICATION

(11) **EP 0 314 519 B1**
(45) Date of publication and mention of the grant of the patent: **10.08.1994**
(21) Application number: 88310210.5
(22) Date of filing: 31.10.1988
(51) Int. Cl.: B07C 5/36, B65G 47/84

(54) **Automatic sorting system**
Automatisches Sortiersystem
Système de tri automatique

(30) Priority: 30.10.1987 JP 273338/87
(43) Date of publication of application: 03.05.1989
(73) Proprietor: KABUSHIKI KAISHA YAKULT HONSHA, Minato-ku Tokyo (JP)
(72) Inventor: Kimura, Minao, Tokorozawa-shi Saitama-ken (JP); No, Shinichiro, Hoya-shi Tokyo (JP)
(74) Representative: Leale, Robin George

(56) References cited:
- EP-A- 0 084 905
- DE-A- 2 941 576
- FR-A- 2 132 698
- GB-A- 1 456 201
- US-A- 3 791 518
- US-A- 4 069 908
- US-A- 4 256 216
- US-A- 4 501 365

## Description

The present invention relates to an automatic sorting system for accurately promptly sorting a number of objects in response to an output signal of a detecting mechanism.

There are a large number of objects, which are mass-produced and processed in the manufacturing steps, such as vessels, bottles, cans, containers, or the like (all of them are generally referred to as vessels, hereinafter) for drinks in which contents are filled. As a method of classifying or sorting these objects, the following methods are known:
In a method so-called "2-kind sorting method", the objects are sorted into two groups, i.e. "good articles group" and "defective articles group". An article belonging in the "good articles group" can be up to various kinds of standards, however, an article belonging in the "defective articles group" is below the standards;
In a method so-called "3-kind sorting method", the objects are sorted into three groups. Value of an object belonging in the first group exceeds a reference value. Value of an object belonging in the second group is in an allowed range of the reference value. Value of an object belonging in the third group is lower than the reference value;
In a method so-called "multikind sorting method", the objects are sorted into four or more groups in accordance with predetermined reference values or standards.

Hitherto, many kinds of apparatus for automatically performing those kinds of sorting processes, especially, the 2-kind sorting process, have been proposed. As such a conventional automatic sorting apparatus, for instance, there is known an apparatus in which the quality of each object conveyed by a conveyor or the like is discriminated by a sensor and the object which has been determined to be the defective article is pushed out to the outside of the conveyor by an ejector mechanism, air jet means, or the like, thereby eliminating the defective article from the conveyor. Also, there is known an apparatus in which a drop lid and an opening/closing mechanism of this lid are provided on the passage along which objects are conveyed. In said apparatus, when an object to be decided as a defective article passes on the drop lid, the drop lid is opened so as to drop said defective article, thereby eliminating the defective article.

In any of the foregoing types of apparatus, since shock and load are applied to the defective object and the ejected object is damaged, there is a problem such that even the reusable portion of the defective object cannot be used again.

In order to avoid such a problem, an automatic sorting apparatus of the type, in which objects to be sorted are statically handled so as not to apply a shock to the objects, has also been proposed.

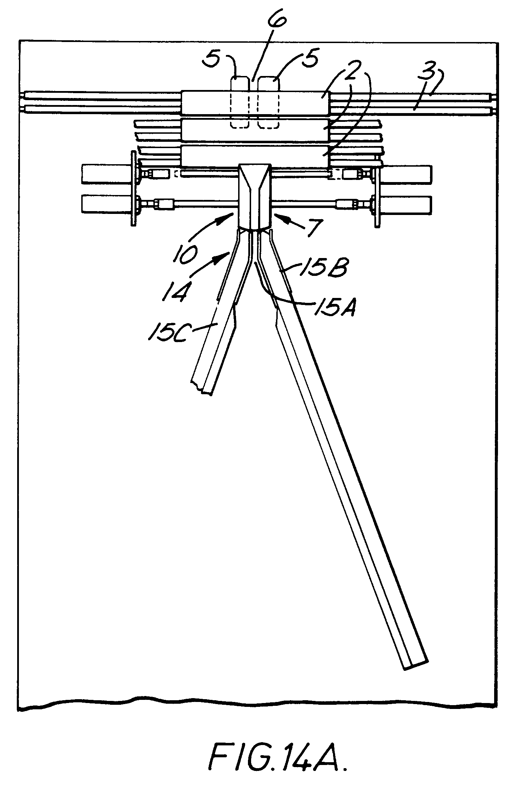

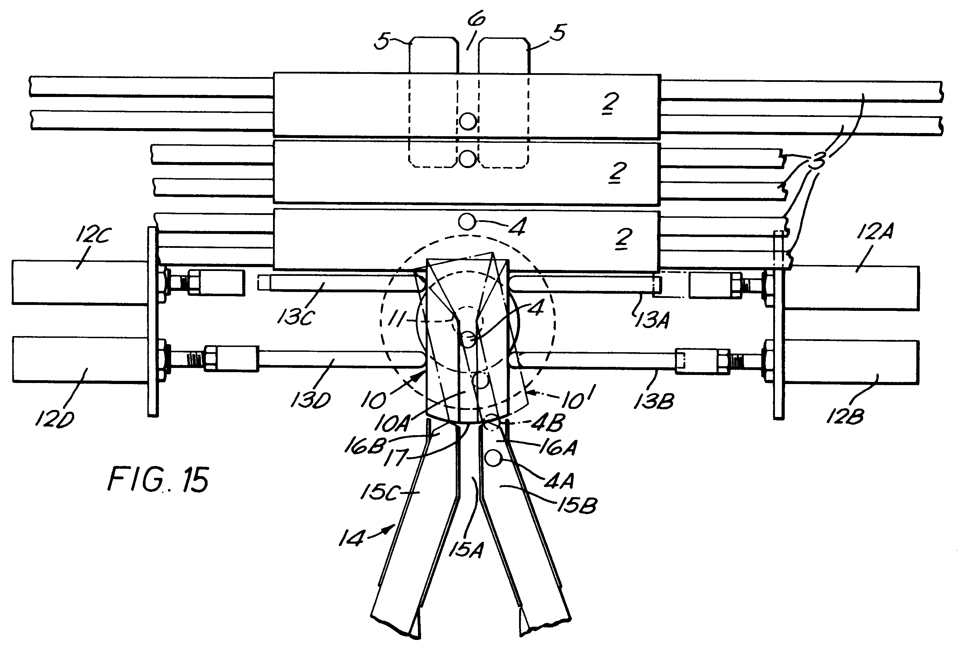

Such a type of automatic sorting apparatus is shown in, e.g., Figs. 14A, 14B, and 15. In Fig. 14A, an automatic sorting apparatus 1 has a plurality of continuous plates 2 on which vessels containing a drink or other objects are put. As shown in Fig. 14B, each of the plates 2 is slidably supported by two slide rods 3. A pin 4 is attached vertically at the center of the plate 2. The pin 4 is guided by a passage 6 provided in a space between collars 5, thereby the plate 2 is led toward a sorting portion 7. As will be explained hereinafter, the sorting portion 7 is constructed by a flapper and a branched rail. By means of the sorting portion 7, the plate 2 being led from the position of the collars 5 is moved straightly, or is moved to the right or left direction, in response to a signal from a sensor.

The sorting portion 7 consisting of the flapper and rail will now be further described in detail with reference to Fig. 15.

A flapper 10 is rotatable around a shaft 11 as a rotational center. Rods 13A, 13B, 13C, and 13D, which are respectively pressed by corresponding cylinders 12A, 12B, 12C, and 12D, are in contact with the flapper 10. A rail 14 is continuously coupled with the flapper 10. Three passages 15A, 15B, and 15C are formed on the rail 14.

The pin 4 passes through a central portion 10A of the flapper 10, and thereafter, it passes along either one of the three passages 15A, 15B, and 15C.

When an object is decided as a good article by the sensor, the flapper 10 is set at a position indicated by a solid line in Fig. 15, so that the pin 4 passing through the central passage 10A of the flapper 10 and then passes along the passage 15A. Therefore, the plate 2, on which the object is put, continuously goes straight in the central portion of the apparatus 1.

If the object is decided as a defective article by the sensor, the cylinders 12A to 12D are made operative and the flapper 10 is rotated by the rods 13A to 13D, so that the flapper 10 moves to, e.g., a position 10' indicated by an alternate long and two short dashes line in Fig. 15. Thus, the pin 4 arrived from the passage 10A passes along the passage 15B, and the object put on the plate 2 having this pin 4 is deviated to the right side in Fig. 15, relative to the good article on the apparatus 1, and said object advances to the right direction. The other hand, by rotating the flapper in the direction opposite to the passage 15B, the pin 4 passes along the passage 15C, so that the plate 2 having the pin 4 and the object are deviated to the left side, relative to the good article.

Just after a pin of a plate, on which an object having been decided as a defective article is put, has entered the passage 15B or 15C, the flapper 10 is returned to the original central position shown by the solid line. Therefore, a pin of a plate, on which an object having been decided as a good article, is led toward the passage 15A.

As explained above, since the plate on which the object is put goes straight or is deviated and then advances, no shock is applied to the object.

However, the automatic sorting apparatus of the type shown in Figs. 14A, 14B, and 15 has a problem such that a sorting speed, i.e., a speed for conveying the object to be sorted, cannot be made fast than a predetermined speed. If the conveying speed of the object is set to a high speed, the interval between the pins 4 is reduced. Thus, for example, when the flapper located at the position indicated by the alternate long and two short dashes line 10' in Fig. 15 is returned to the central position indicated by the solid line, there is a danger that a pin 4B (pin of a plate on which an object having been decided as a good article is put) being continuous to a pin 4A (pin of a plate on which an object having been decided as a defective article is put) and being led to the passage 15B is sandwiched and locked between a front end portion 16A of the rail 14 and a rear edge portion 17 of the flapper 10, or is lifted up in the direction perpendicular to the paper surface of Fig. 15 and then is removed. On the other hand, it is difficult to synchronize the rotation of the flapper 10 with the conveyance of the object. Thus, there is also a risk of occurrence of a malfunction such that the pin of the plate on which the object having been decided as a defective article passes through the passage 15A, and a pin of a plate on which an object having been determined as a good article passes through the passage 15B or 15C. Further, since the existing conveyor cannot be used with the apparatus mentioned above, this apparatus is uneconomical. Also known from the prior art is DE-A-2941576 which discloses the preamble of claim 1.

The present invention is characterised in that said branches have upstream ends of different depths, and at least one of said branches has a step portion at its upstream end, and in that at least one shaft displacement member is provided for moving the shaft portions of the moving members vertically in response to signals from a detecting device, said at least one displacement member being located upstream of the branches so that the vertical position to which the shaft portion is moved by the displacement member will determine whether or not said shaft portion will contact said step portion and thus determine which of the branches will be followed by the shaft portions and their respective moving members.

By means of this arrangement there is provided an automatic sorting system in which an object to be sorted can be handled without applying a shock to this object, even if a sorting speed is made fast, it is prevented that a pin is locked or removed, and a malfunction can be perfectly prevented.

In preferred embodiments, the object is pushed out by the moving members in the horizontal direction, that is, in the direction perpendicular to the conveying direction of the object. The shaft portion of each moving member is guided by the control guide, so that the moving member is moved along the path of the control guide. Thus, the object is pushed out by the moving members in the horizontal direction along the path of the control guide, and a trace of movement of the object is in parallel with said path. The control guide is constructed by a smooth curve and/or a straight line. Therefore, the object can be smoothly pushed out by the moving members without applying a shock to the object.

The shaft portion of the moving member is displaced in the vertical direction by the displacement means in response to a detection signal generated from the detecting mechanism for measuring or discriminating an object. So, a depth of portion which is inserted in the groove-shaped control guide is adjusted to a predetermined numerical value. The shaft portion of the moving member does not enter a control guide the depth of which is shorter than the depth (length) of the shaft portion, and the depths of control guide are different one another. Therefore, in the branch portion of the control guide, each shaft portion enters the control guide the depth of which corresponds to the depth of the shaft portion. In this case, an amount of movement of the object in the horizontal direction depends on which control guide the shaft portion of the pushing member (moving member) is inserted. Accordingly, when the shaft portion is inserted in the different control guide, the amount of movement in the horizontal direction by the moving member is also different, and therefore, the position in the horizontal direction of the object is also different. Thus, the object can be sorted on the basis of the position in the horizontal direction, or the like.

By means of this arrangement the shaft portion of the moving member does not enter in a guide other than a predetermined control guide in the branch portion, so that there is no risk of occurrence of a malfunction. Also, since no rotating members and the like are provided in the branch portion of the control guide, it is prevented that the shaft portion is locked or is lifted up from the control guide and come into disengagement therefrom. Consequently, even if the sorting speed is increased, the inconveniences which have generated in the conventional techniques do not occur. Moreover, a large number of objects can be accurately promptly sorted.

Further, since the automatic sorting system of the present invention can be also used by combining with the existing conveyor as explained hereinafter, this system is very economical.

In preferred embodiments, the control guide may be branched into two control guides in the branch portion or may branch into three or more control guides. When the control guide is branched into two control guides, this system is used in the 2-kind sorting system for sorting, e.g., an object into a good article and a defective article. When the control guide is branched into three control guides, this system is used in the 3-kind sorting system for sorting an object into three groups: for instance, the volume or weight is within an allowance range of a reference value, exceeds the reference value, and is lower than the reference value. When the control guide is branched to four or more control guides, this system is used in a system so-called "multikind sorting system".

In the case of using the system of the invention in a multikind sorting system, two or more branch portions of the control guide can be provided. By increasing the number of branch portions, the control guide can be branched to the number corresponding to the number of kinds to be sorted. In addition, since the number of control guides to be branched in each of the branch portion can be reduced by increasing the number of branch portions, each branch portion can be easily worked.

It is desirable that a plurality of branched control guides are again combined to one control guide. This is because the moving members which progress along the control guide can be easily endlessly circulated.

It is preferable that the moving member has a rod to move an object.

If a plate for pushing out an object is attached to the front end portion of the rod or an elastic material is attached to the front end of the rod, this structure will be preferable for pushing out the object.

Further, it is also desirable to attach a rotatable roller to the front end portion of the rod.

The front end portion of the rod can be also constructed so as to abut on the side edge of a flat plate on which an object is put, or the flat plate and rod can be integrally fixed. With such a structure, the flat plate moves together with the moving members and the object being put on the flat plate also moves. In this case, one object may be put on the flat plate or on a plurality of flat plates. In the case that the front end of the rod is in contact with the side edge of the flat plate, it is desirable to press the flat plate toward the rod. In this manner, the front end of the rod and the side edge of the flat plate can always come into contact with each other.

The moving member has a main body portion fixed integrally with the rod. It is preferable that the shaft portion slidably penetrates the main body portion and is loosely snapped therewith. With this construction, the moving member can push out an object by the rod and the trace of movement of said object is in parallel with the path of the control guide into which the shaft portion of said moving member is entered. Also, by slidably penetrating the shaft portion into the main body portion, the depth of shaft portion (length of the portion being entered in the control guide) can be easily changed.

Further, it is preferable that the rod of the moving member slidably penetrates a pin of a chain and a plurality of moving members simultaneously move in the progressing direction of the chain. With this structure, a plurality of moving members can be easily endlessly circulated by the chain and the object can be easily moved by the rod in the direction perpendicular to the progressing direction of the moving members (in the progressing direction of the chain).

A silent chain is preferably used as said chain because the operation noises can be reduced. Also, it is possible to use a timing belt in place of the chain. A timing belt is provided with a thrust bearing portion being attached in the direction perpendicular to the running direction of the moving member of the belt.

The displacement means is preferably constructed by a cam consisting of a combination of a plurality of arcs having different radii. It is desirable that the rotation of a rotating shaft of a sprocket, which is in engagement with the chain, is transmitted to a rotating shaft of the cam to rotate said cam. This is because the construction can be simplified by using a driving source of the sprocket of the chain as a driving source of the cam.

In order to rotate the cam, it is desirable to construct such that a clutch is attached to the rotating shaft of the cam and the clutch is connected and/or disconnected in response to a signal generated from the detecting mechanism. However, it is also possible to construct such that the rotating shaft for rotating the cam is directly coupled with the rotating drive member and the rotating drive member is driven or stopped in response to the signal generated from the detecting mechanism.

The displacement means to displace the shaft portion of the moving member in the vertical direction is not limited to the cam but may be constructed by a piston member. In the manner mentioned above, an amount of deviation of the piston member changes in response to the signal generated from the detecting mechanism.

If the control guide is branched at two or more positions, it is preferable that two or more displacement members are provided and at least one displacement member is provided on the upstream side just before each of the branch portion. This is because an amount of deviation of the shaft portion of the moving member, e.g. a depth (length of the portion being inserted in the control guide), is adjusted just before the branch portion in order to assure that each moving member advances along a predetermined control guide, thereby preventing the occurrence of the malfunction.

When the automatic sorting system of the present invention is operated, it is desirable that the conveyor which moves with an object put thereon is arranged adjacent to the moving members. Since, the sorting operation is performed by pushing the objects in the horizontal, say, direction by a predetermined distance with the moving members, and by classifying the positions in the horizontal direction of a plurality of objects, there is no need to newly equip a special conveyor. The sorting work can be immediately started by merely installing the system of the present invention to a position adjacent to a existing conveyor.

In the case where the 2-kind sorting works are executed by using the automatic sorting system of the present invention to thereby discriminate whether the object is a good article or a defective article, it is also possible to construct such that only the objects having been determined as good articles are pushed out in the horizontal direction by the moving members and the objects having been decided as defective articles are not horizontally moved but are moved straight. On the contrary, it is also possible to construct such that only the objects having been decided as defective articles are pushed out in the horizontal direction by the moving members.

When the automatic sorting system of the invention is used by combining with the existing conveyor, the moving member moves an object on the conveyor in the horizontal direction while said moving member is moving in the longitudinal or horizontal direction along the control guide, and the object is sorted on the basis of the position in the horizontal direction on the conveyor. The progressing speed of the conveyor is synchronized with the moving speed of the chain.

When embodying the invention, it is also possible to construct such that the control guide is formed on the bottom plate and the displacement member deviates the shaft portion of the moving member downwardly in the vertical direction in response to the signal generated from the detecting mechanism. It is also possible to construct such that the control guide is formed on the top plate and the displacement member deviates the shaft portion of the moving member upwardly in the vertical direction. (The former type relates to an embodiment explained hereinafter).

It is desirable that the control guide is of the type such that the shaft portion of the moving member is supported and/or guided at two opposite positions, for instance, the control guide is formed like a groove, or the type such that the shaft portion of the moving member is guided at one position, for example, said guide is formed like a guide plate. In the embodiment which will be explained hereinlater, the control guide of the former type is used, the control guide is formed as a guide groove, and the shaft portion of the moving member is inserted in this guide groove.

Further, if the ratio of the occurrence of defective articles is small, it is desirable to construct such that the automatic sorting system is merely made operative by connecting a switch only when a defective article occurs, and then eliminates the defective article. This is because the noises, which are generated when the automatic sorting system operates, can be reduced and the energy can be also saved.

Some embodiments of the invention will now be described by way of example and with reference to the accompanying drawings, in which:-
Fig. 1 is a plan view of the first embodiment of an automatic sorting system according to the present invention;
Fig. 2 is a front view of this system;
Fig. 3 is a side elevational view of this system;
Fig. 4A is a plan view of a branch portion of a guide groove shown in Fig. 1;
Fig. 4B is a cross sectional view taken along the line B-B in Fig. 4A;
Fig. 4C is a cross sectional view taken along the line C-C in Fig. 4A;
Fig. 4D is a cross sectional view taken along the line D-D in Fig. 4A;
Fig. 5 is a front view of a displacement member shown in Fig. 1;
Fig. 6 is a vertical sectional view of Fig. 4A;
Fig. 7A is a plan view of a guide groove which is used in another embodiment of the present invention;
Fig. 7B is a schematic cross sectional view of Fig. 7A;
Fig. 7C is a cross sectional view showing still another embodiment of the present invention and is similar to Fig. 7B;
Figs. 8 and 9 are cross sectional views at different positions of a guide groove shown in Fig. 7A, respectively;
Fig. 10 is a front view of a displacement member which is used in the embodiment shown in Figs. 7A to 7C;
Fig. 11 is a plan view of a guide groove used in further another embodiment of the present invention;
Figs. 12A and 12B are front views of other embodiments of a displacement member, respectively;
Fig. 13A is a front view showing another embodiment of a rod which is used in the present invention;
Fig. 13B is a plan view of the embodiment shown in Fig. 13A;
Fig. 13C is a plan view showing still another embodiment of the present invention;
Fig. 14A is a plan view showing a conventional automatic sorting apparatus;
Fig. 14B is a side elevational view of the apparatus shown in Fig. 14A; and
Fig. 15A is a partial enlarged diagram of Fig. 14A.

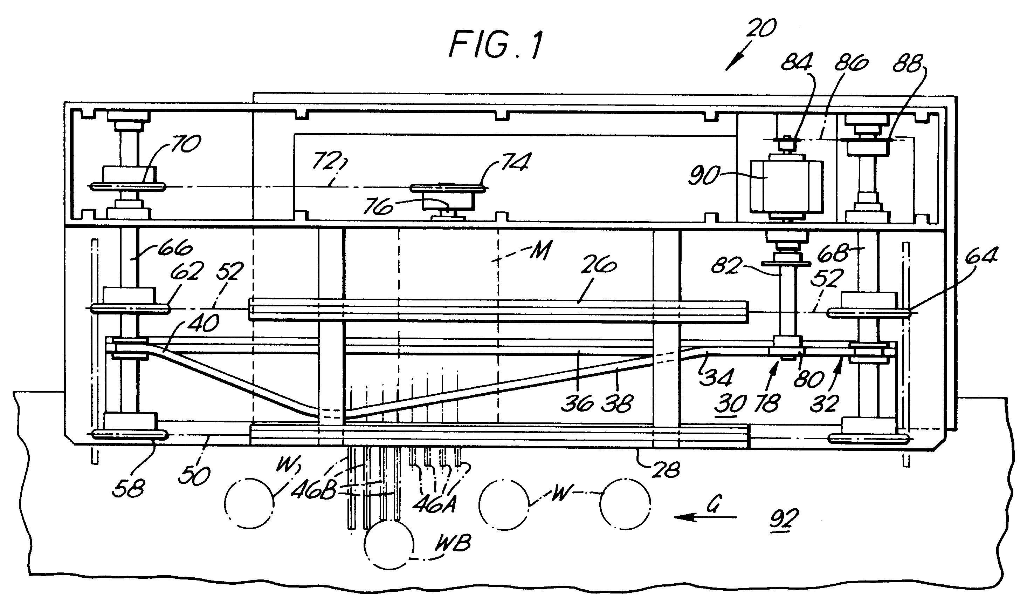

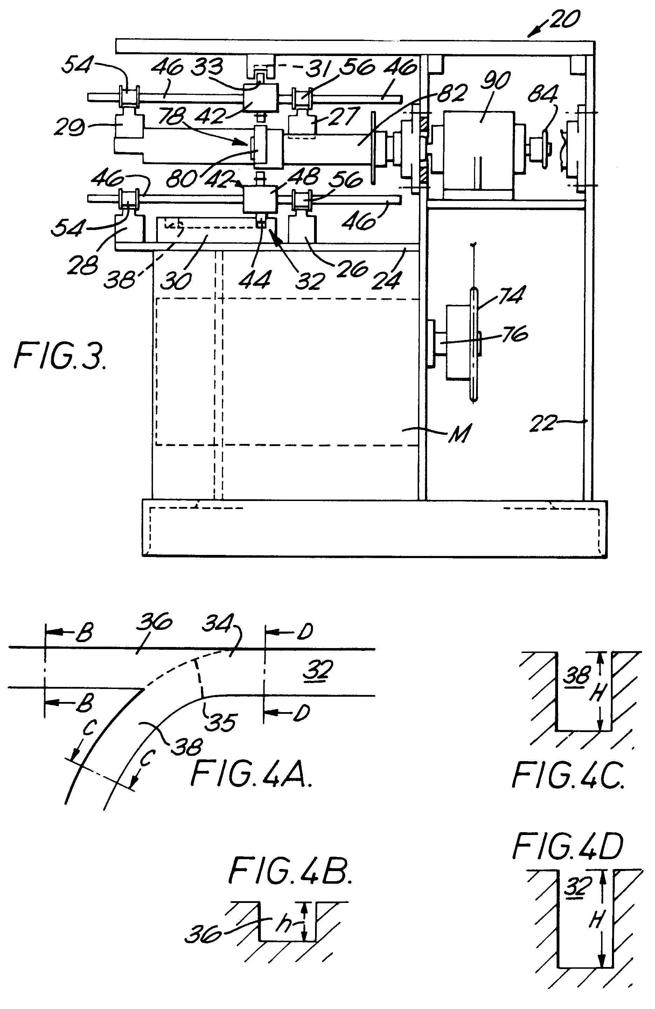

In Figs. 1 to 3, an automatic sorting system 20 of one embodiment is installed on a base 22. Chain guide portions 26 and 28 and top plate 30, on which a control guide or guide groove is formed, are mounted on an upper plate 24 of the base 22. As shown in Fig. 1, a control guide or guide groove 32 formed on the upper plate 30 is branched off two grooves 36 and 38 in a branch portion 34. The two guide grooves 36 and 38 are combined to one guide groove 32 in a combining portion 40. As shown in Figs. 4A to 4C, a depth h of the guide groove 36 and a depth H of the guide groove 38 are different, and there is a relation of H > h therebetween. As shown in Fig. 4D, a depth of the guide groove 32, which is located upstream (right side in Fig. 4A) of the position where the groove 32 is branched,is also equal to the depth H of the groove 38.

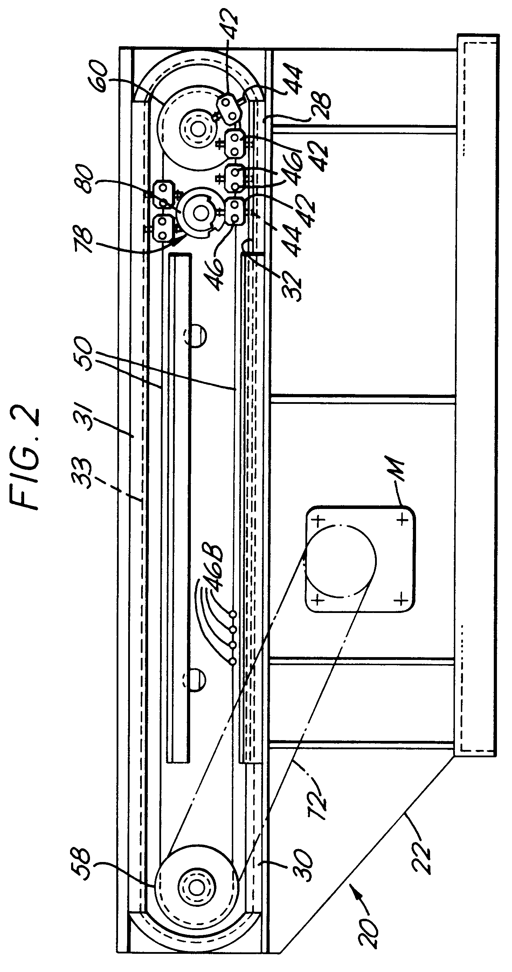

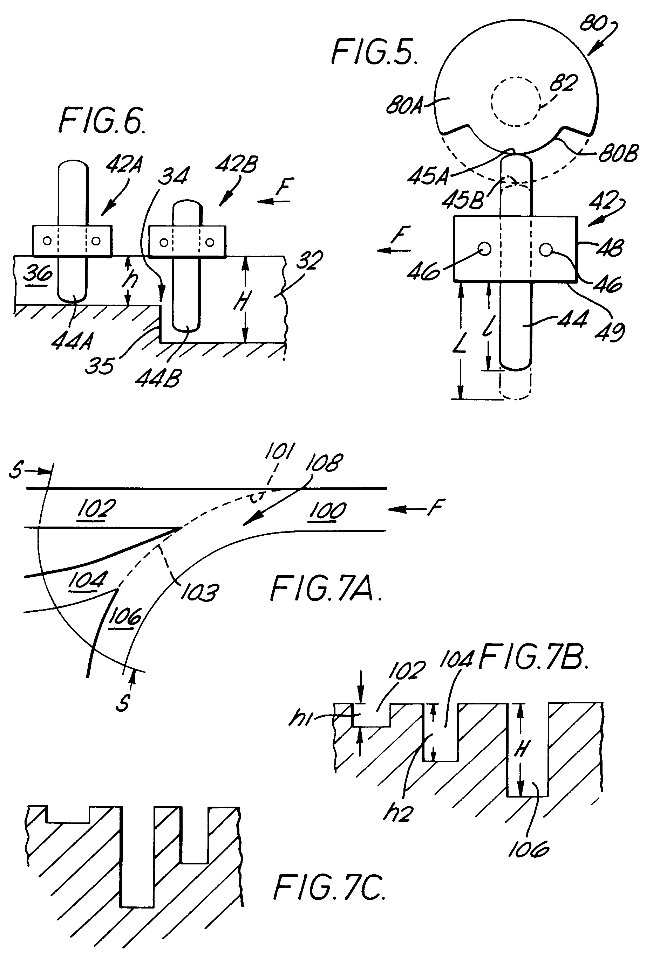

Shaft portions 44 of a plurality of moving members 42 are inserted and/or entered into the guide groove 32 (36, 38). The moving are particularly illustrated in detail in Fig. 5, and have a rod 46 and a main body portion 48 which is formed integrally with the rod 46. The shaft portion 44 is slidable in the vertical direction in Fig. 5 with respect to the main body portion 48. As will be understood from Fig. 2, in the embodiment shown in the drawings, two rods 46, 46 are provided for each of the moving members 42.

The rod 46 slidably penetrates pins 54 and 56 (Fig. 3) of chains 50 and 52. Thus, a plurality of moving members 42 progress synchronously with the advancement of the chains 50 and 52 and are endlessly circulated, as shown in Fig. 2.

The chain 50 is in engagement with sprockets 58 and 60, and the chain 52 is in engagement with sprockets 62 and 64 (Fig. 1). The sprockets 58 and 62 are fixed to a same rotating shaft 66, and the sprockets 60 and 64 are also fixed to a same rotating shaft 68. Thus, the chains 50 and 52 are synchronously endlessly circulated.

The rotation of a rotating shaft 76 provided with a motor M is transmitted to the rotating shaft 66 through a sprocket 74 fixed to the shaft 76, a chain 72 which is come into engagement with the sprocket 74, and a sprocket 70 which is come into engagement with the chain 72. That is, the plurality of moving members 42 are endlessly circulated by using the motor M as a driving source.

A displacement member 78 is provided on the upstream side just before the branch portion 34 (Fig. 1) of the guide groove 32. As shown in Figs. 2 and 5, the displacement member 78 consists of a cam 80 formed with two arcs having different radii. The displacement member 78 is arranged at such a position that the upper end portion of the shaft portion 44 of the moving member 42 comes into contact with the cam surface of the cam 80 and moves in this contacting state.

The cam 80 of the displacement member 78 is fixed to a rotating shaft 82. The rotation of the rotating shaft 68 is transmitted to the rotating shaft 82 through a sprocket 88, a chain 86, and a sprocket 84. A clutch 90 is attached to the rotating shaft 82. Through the clutch 90, rotation of the sprocket 84 is transmitted to the cam 80 and/or shut off. The connection or disconnection of the clutch 90 is performed in response to an output signal generated from a detecting mechanism (not shown).

In Fig. 1, a conveyor 92 is provided on the side (at a downward position in the diagram) of the automatic sorting system 20. A plurality of objects W to be sorted are put on the conveyor 92 and carried. In Fig. 2, reference numeral 31 denotes a top plate.

The operation of the embodiment shown in Figs. 1 to 3 will now be described with reference to Figs. 4A to 4D, 5, and 6.

As mentioned above, the displacement member 78 (cam 80) is arranged on the upstream side (at the right position in Fig. 1) of the branch portion 34 of the guide groove. As shown in Fig. 5, the cam 80 is formed by the cam surfaces consisting of a large arc portion 80A and a small arc portion 80B. In the state shown in Fig. 5, the small arc portion 80B is in contact with an upper end portion 45A of the shaft portion 44 of the moving member 42. A length (depth) of the shaft portion 44 being lower than a lower surface 49 of the main body portion 48 is shown by character ℓ. The depth ℓ is shallower (shorter) than the depth h of the shallower branched guide groove 36 shown in Fig. 4B (ℓ ≦ h).

On the other hand, a clutch 90 (Fig. 1) is connected in response to a signal from the detecting mechanism (not shown). When the cam 80 rotates by a half circle around the rotating shaft 82 as a rotational center, the large arc portion 80A comes into contact with the upper end of the shaft portion 44 as indicated by a broken line in Fig. 5, and the upper end of the shaft portion 44 descends to a position 45B shown by a broken line. Thus, the whole shaft portion 44 is downwardly depressed and the depth of the shaft portion 44 is now shown by character L. In other words, the shaft portion 44 is downwardly pressed by only the distance of (L - ℓ). In this case, there is a relation of h < L ≦ H. (The character H is a depth of the guide groove 38 shown in Fig. 4C.)

With reference to Figs. 4A and 6, a consideration will now be made with regard to the case that both of a moving member 42A having a shaft portion 44A of the depth ℓ and a moving member 42B having a shaft portion 44B of the depth L progress in the direction indicated by an arrow F, with the chain or the like, and reach the branch portion 34.

In the branch portion 34, a height difference portion (or step portion) 35 (indicated by a broken line in Fig. 4A) is formed so as to extend the guide groove 38. As will be obviously understood from Fig. 6, the height difference portion 35 has the height difference of (L-ℓ).

The moving member 42A having the shaft portion 44A of the depth ℓ (ℓ ≦ h: refer to Fig. 5) goes straight in the direction of the arrow F and exceeds the height difference portion 35 is led to the guide groove 36 of the depth h without coming into contact with the height difference portion 35. Thereafter, the moving member 42A goes straight along the guide groove 36.

On the other hand, the moving member 42B having the shaft portion 44B of the depth L (h < L ≦ H) can move along the guide groove 32 of the depth H; however, it cannot enter the groove 36 by clearing the height difference portion 35, as clearly shown in Fig. 6. Therefore the moving member 42B enters the groove 38 along the height difference portion 35 shown by a broken line in Fig. 4A.

Referring now to Fig. 1, since the guide groove 36 consists of a straight line, the moving member 42A entering this groove also goes straight without changing the position in the horizontal direction (the direction perpendicular to the chains 50 and 52). Therefore, rods 46A, 46A ... of the moving member 42A also progress in the longitudinal direction without coming into contact with the object W on the conveyor 92. On the other hand, since the guide groove 38 is formed like a curve so as to approach the conveyor 92 and object W, the moving member 42B entering the guide groove 38 also approaches the object W. The rods 46B, 46B ... of the moving member 42B downwardly push a predetermined object WB on the conveyor 92. Thus, since the positions in the horizontal direction (the direction perpendicular to the progressing direction G of the conveyor 92) on the conveyor 92 of the object WB pushed by the rod 46B and of the object W which is not pushed are clearly different, the two kinds of objects WB and W can be sorted (2-kind sorting).

In other words, the detecting mechanism (not shown) and clutch 90 are synchronized in a manner such that when the moving member 42B having the rod adjacent to the object WB passes just below the displacement member 78 (cam 80), the large arc portion 80A of the cam 80 and the shaft portion 44B come into contact with each other and the shaft portion 44B is downwardly depressed. Thus, the object WB can be pushed out by the rod 46B and can be sorted.

The moving member 42B which pushes the object WB downwardly in Fig. 1 by the rod 46B is directed toward the combining portion 40 along the guide groove 38 and then, joins with the moving member 42A which has reached to the combining portion 40 by progressing along the groove 36. Thereafter, both of the moving members 42A and 42B are arranged in a line again. The joined moving members 42B and 42A are conveyed by the chains 50 and 52 which are guided by guides 27 and 29 (Fig. 3) and move over the member 30 (Fig. 3) along an upper guide groove 33 formed on the top plate 31. In this manner, the moving members are endlessly circulated as shown in Figs. 2 and 3.

Although the embodiment shown and described in Figs. 1 to 6 relates to the automatic sorting system for the 2-kind sorting, the 3-kind sorting system can be also realized by changing the shapes of guide grooves and the arrangement of the displacement member and the like.

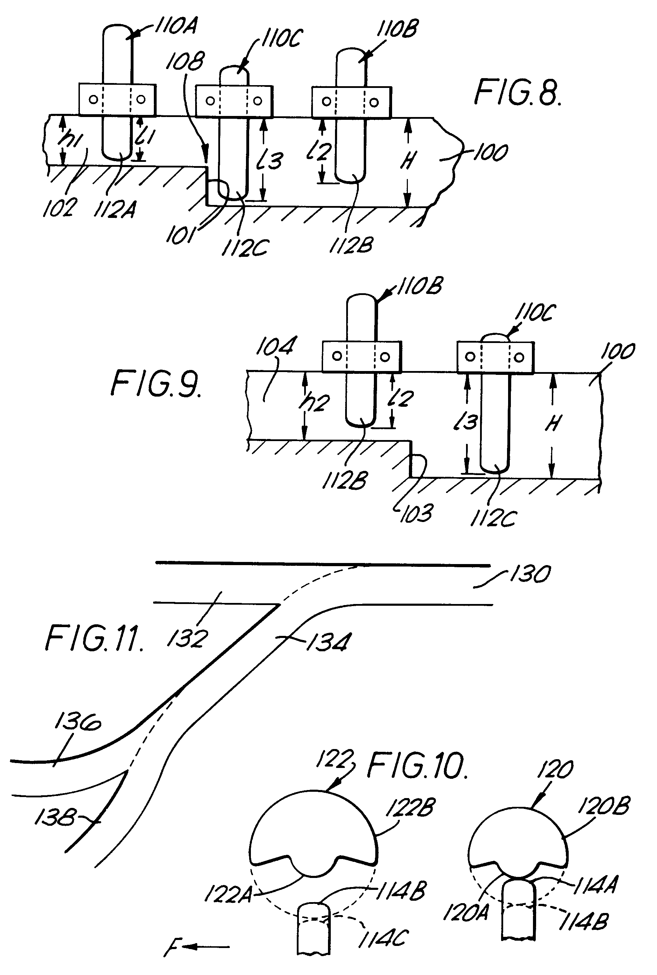

For instance, as shown in Fig. 7A, if a guide groove 100 is branched into three guide grooves 102, 104, and 106 having different depths, the object W is pushed to either one of the three different horizontal positions on the conveyor 92 by the rod 46 of the moving member 42.

In Figs. 7A and 7B, the guide groove 100 of the depth H is branched off three guide grooves 102, 104, and 106. A depth of guide groove 102 is shown by character h₁ (Fig. 8), a depth of guide groove 104 is shown by character h₂ (Fig. 9), and a depth of guide groove 106 is equal to the depth H of the guide groove 100. There is the relation of (h₁ < h₂ < H) among them.

On the upstream side of a branch portion 108, depths of shaft portions 112A, 112B, and 112C of moving members 110A, 110B, and 110C are set to ℓ₁, ℓ₂, and ℓ₃ by the displacement member, respectively. The depth ℓ₁ of shaft portion 112A of the moving member 110A is set to be h₁ > ℓ₁. The depth ℓ₂ of shaft portion 112B of the moving member 110B is set to be h₁ < ℓ₂ < h₂. The depth ℓ₃ of shaft portion 112C of the moving member 110C is set to be h₂ < ℓ₃ ≦ H.

When the moving members 110A, 110B, and 110C, which progress in the direction of the arrow F shown in Fig. 7A, arrive at the branch portion 108, the shaft portion 112A of the moving member 110A exceeds a height difference portion 101 and enters a guide groove 102 as shown in Fig. 8. However, since the shaft portions 112B and 112C of the moving members 110B and 110C cannot exceed the height difference portion 101, the moving members 110B and 110C try to enter a guide groove 104 along the height difference portion 101. As shown in Fig. 9, the shaft portion 112B of the moving member 110B can exceed a height difference portion 103 and can enter the guide groove 104. However, since the shaft portion 112C of the moving member 110C cannot exceed the height difference portion 103, it enters a guide groove 106. Consequently, the moving members 110A, 110B, and 110C are led to the guide grooves 102, 104, and 106, in correspondence to the depths of their shaft portions, respectively. Further, even if the number of grooves to be branched is increased to four or more, the similar operations are also executed.

As mentioned above, there is the relation of h₁ < h₂ < H among the depths of the three branched guide grooves 102, 104, and 106 described in Figs. 7A, 8, and 9, and this relation is shown in Fig. 7B. However, even when the depths of those grooves are set as shown in, e.g., Fig. 7C, the 3-kind sorting operation is also performed by the similar principle.

As a mechanism for setting the depths of the shaft portions 112A, 112B, and 112C to ℓ₁, ℓ₂, and ℓ₃, it is possible to use a mechanism in which two cams each consisting of a combination of two arcs having different radii are arranged serially as shown in, e.g., Fig. 10. In Fig. 10, a cam 120 comprises a small arc portion 120A and a large arc portion 120B. A cam 122 comprises a small arc portion 122A and a large arc portion 122B. The small arc portions 120A and 122A have the same radius. A radius of the large arc portion 120B is smaller than that of the large arc portion 122B. The cam 120 is arranged on the upstream side (on the right side in Fig. 10) than the cam 122.

When a upper end portion 114A of the shaft portion 112A having the depth ℓ₁ passes the positions under the cams 120 and 122, since the small arc portions 120A and 122A face downward, the shaft portion passes without being depressed downwardly.

When a upper end portion 114B of the shaft portion 112B having the depth ℓ₂ passes the positions under the cams 120 and 122, the cam 120 is rotated by a half circle in response to a signal generated from the detecting mechanism (now shown), so that the large arc portion 120B faces downward and the upper end portion of the shaft portion 112B is depressed to the position indicated at reference numeral 114B. In this case, since the small arc portion 122A of the cam 122 faces downward, the shart portion 112B is not depressed downward by the cam 122.

When the shaft portion 112C having the depth ℓ₃ passes, the cams 120 and 122 are rotated such that both of the large arc portions 120B and 122B face downward. When the shaft portion 112C passes the position under the cam 120, the upper end portion of the shaft portion 112C is depressed to the position 114B shown by a broken line. Next, when the shaft portion 112C passes the position under the cam 122, the upper end portion is depressed to a position indicated at 114C shown by a broken line.

In place of branching off the guide groove to three grooves at one position (Fig. 7), two or more branch portions can be also provided as shown in Fig. 11. That is, a guide groove 130 is branched off grooves 132 and 134. The guide groove 134 is further branched off grooves 136 and 138 on the downstream side. The guide grooves 132, 136, and 138 have different depths. Shaft portions having three different kinds of depths enter the guide grooves of the corresponding depths, in a manner similar to the embodiment described in Figs. 7 to 9. Although two branch portions have been provided in Fig. 11, by increasing the number of branch portions, the number of grooves can be increased in correspondence to the number of kinds to be sorted.

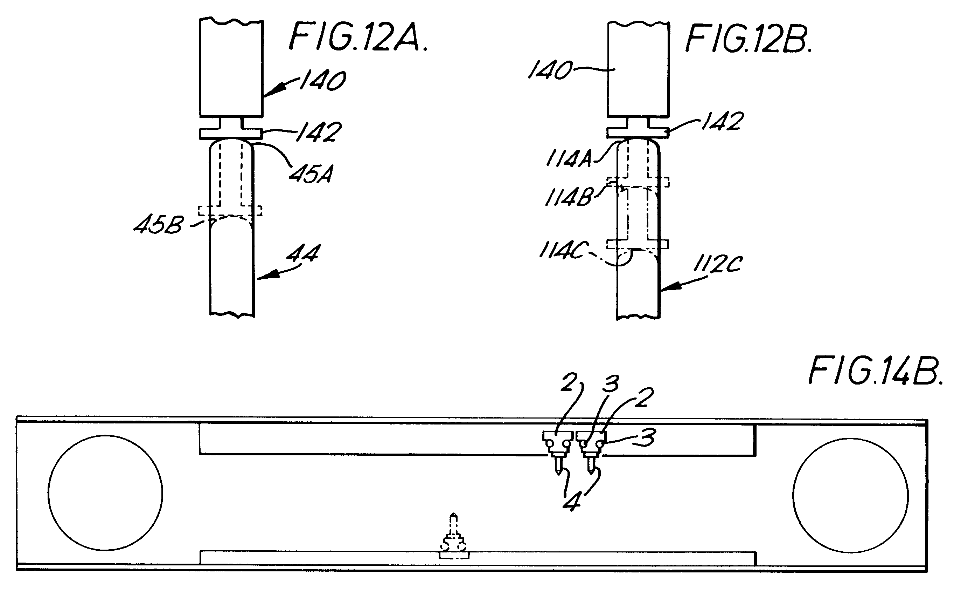

In place of using the cam 80 (Fig. 5) and cams 120 and 122 (Fig. 10), a piston member 140 shown in Figs. 12A and 12B can be also used as the displacement member. In Figs. 12A and 12B, the piston member 140 has a depressing member 142 and this depressing member downwardly depresses the shaft portion of the moving member in response to a signal generated from the detecting mechanism (now shown). Fig. 12A shows the case where the piston member 140 is used for the 2-kind sorting which has already been described in conjunction with Figs. 1 to 6. When the moving member 42A (Fig. 6) passes the position under the piston member 140, the depressing member 142 does not move downwardly and the upper end portion 45A of the shaft portion is not depressed downwardly. However, when the moving member 42B (Fig. 6) passes, the depressing member 142 descends to depress the upper end portion of the shaft portion to the position 45B indicated by a broken line.

In the case of the 3-kind sorting shown in Figs. 7 to 11, as shown in Fig. 12B, the depressing member 142 descends at two height levels and the upper end portion of the shaft portion is located at a predetermined position 114A (indicated by a solid line), 114B (indicated by a broken line), or 114C (shown by an alternate long and two short dashes line).

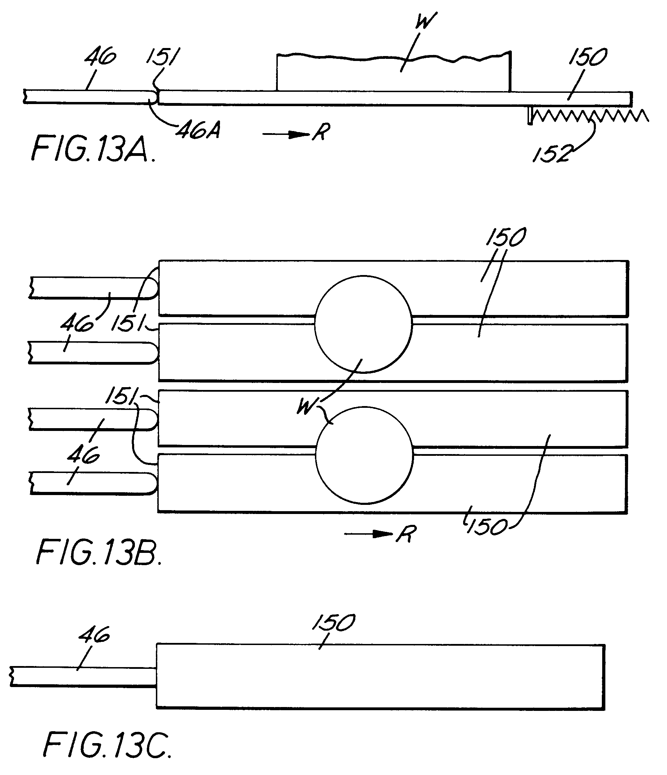

Figs. 13A to 13C illustrate other embodiments for pushing out an object W, by means of the rod 46. In Fig. 13A, the front end portion 46A of the rod 46 is in contact with a side edge portion 151 of a flat plate 150 on which the object W is put. Therefore, when the moving member moves in the direction of an arrow R along the guide groove, the front end portion 46A of the rod 46 pushes out the flat plate 150, so that flat plate 150, on which the object W is put, is also pushed out in the direction of the arrow R. Reference numeral 152 denotes an urging device for pressing the flat plate 150 in the direction opposite to the direction shown by arrow R. The urging device 152 consists of, e.g., a spring or the like. When the moving member moves in the direction opposite to the arrow R, the flat plate 150 is pressed toward the rod 46 by the urging device 152. Thus, the front end portion 46A of the rod 46 and the side edge portion 151 of the flat plate 150 are always held in the contacting relation.

One object W may be put on one flat plate 150 or may be put on a plurality of flat plates 150. Fig. 13B shows the case where one object W is put on two flat plates 150.

Fig. 13C shows an example in which the flat plate 150 and rod 46 are integrally fixed.

As described above, according to the automatic sorting system of the present invention, a particular object is pushed out by the moving member and sorted on the basis of the position of the object. A discrimination regarding whether the moving member should push out a particular object or not is made in dependence on which control guide the shaft portion of the moving member is guided and/or passes. Each shaft portion enters only the control guide having the depth corresponding to the depth of the shaft portion. The depth of each shaft portion is adjusted by the displacement member in accordance with a signal generated from the detecting mechanism (not shown).

Therefore, the structure of the automatic sorting system of the present invention is very simple, and, even if the sorting speed is increased, there is no risk of occurrence of the malfunction. Moreover, since this system can be soon installed on the adjacent side of any existing conveyor, it is very economical.

Although the detecting mechanism for use in the automatic sorting system of the present invention is not shown in the drawing, it is possible to use various kinds of well-known measuring or discriminating mechanism such as types including various sensors, for example, photo sensor or magnetic sensor, type having mechanical measuring means, for example, a weight checker or weighing instrument, and the like.

It is to be clearly understood that there are no particular features of the foregoing specification, or of any claims appended hereto, which are at present regarded as being essential to the performance of the present invention, and that any one or more of such features or combinations thereof may therefore be included in, added to, omitted from or deleted from any of such claims if and when amended during the prosecution of this application or in the filing or prosecution of any divisional application based thereon. Furthermore the manner in which any of such features of the specification or claims are described or defined may be amended, broadened or otherwise modified in any manner which falls within the knowledge of a person skilled in the relevant art, for example so as to encompass, either implicitly or explicitly, equivalents or generalisations thereof.

## Claims

1. An automatic sorting system for sorting objects (W) which are conveyed in a machine direction, comprising:
a control guide having a groove (32,100,130) which diverges into a plurality of branches (36,38,102,104, 106,132,134,136,138), and moving members (42,110) which have shaft portions (44,11) which extend into and are guided by said control guide, said moving members (42,110) having means (46) for diverting the objects (W) in a direction which is transverse to said machine direction; characterised in that said branches have upstream ends of different depths, and at least one of said branches has a step portion (35) at its upstream end, and in that at least one shaft displacement member (78) is provided for moving the shaft portions (44,112) of the moving members (42,110) vertically in response to signals from a detecting device, said at least one displacement member (78) being located upstream of the branches so that the vertical position to which the shaft portion (44,112) is moved by the displacement member (78) will determine whether or not said shaft portion (44,112) will contact said step portion (35) and thus determine which of the branches (36,38,102,104,106, 132,134,136,138) will be followed by the shaft portions (44,112) and their respective moving members (42,110).

2. A system according to claim 1, having a branching section (34) wherein said control guide (32) branches off into only two branches (36,38).

3. A system according to claim 1, having a branching section (108) wherein said control guide branches off into three or more branches (102,104,106).

4. A system according to claim 1, having at least two branching sections where the control guide branches off into at least two branches (132,134,136,138).

5. A system according to claim 4 having a plurality of shaft displacement members (140).

6. A system according to claim 1 wherein said branches (36,38) of the control guide converge in a downstream direction to form one control guide.

7. A system according to any preceding claim, wherein the means for diverting objects (W) includes rods (46) which extend transversely from the moving members (42, 110).

8. A system according to claim 7, wherein plates (150) for diverting the objects (W) are attached to end portions of the rods (46).

9. A system according to claim 7, wherein an elastic material is attached to end portions of the rods (46).

10. A system according to claim 7, wherein a rotatable roller is attached to end portions of the rods (46).

11. A system according to claim 7 having flat plates (150) for supporting the objects (W) being sorted, and the rods (46) having front end portions which are in contact with edges (151) of said flat plates (150).

12. A system according to claim 11, further having means (152) for biasing said flat plates (150) toward the rods (46).

13. A system according to claim 7 having flat plates (150) for carrying the objects (W) being sorted, and the rods (46) of said moving members (42,110) are fixed to said flat plates (150).

14. A system according to any of claims 7 to 13 wherein each moving member (42,110) has a main body portion (48) which is rigidly connected to the rod (46), and said shaft portions (44,112) slidably penetrate said main body portion (48).

15. A system according to any preceding claim, having a chain (50,52) which has pins (54,56) which are slidably penetrated by the rods (46) of the moving members (42,110), and a plurality of moving members (42,110) simultaneously move with said chain (50,52).

16. A system according to claim 15, wherein said chain (50,52) is a silent chain.

17. A system according to any of claims 1 to 14 having a timing belt including a thrust bearing having its axis lying perpendicular to the movement direction of said moving member (42,110).

18. A system according to any preceding claim, wherein said at least one shaft displacement member (78) includes a cam (80) which has a plurality of arcs of different radii.

19. A system according to claim 18 having a cam rotating means which includes a rotating shaft (82), a sprocket (88) on the rotating shaft, and a chain (86).

20. A system according to claim 19 including a clutch means (90) that operates to rotate the cam (80) in response to signals from the detecting device.

21. A system according to claim 18, having a shaft for rotating the cam (80), a rotation driving member directly coupled with said rotating shaft, said rotation driving member being operable in response to a signal from the detecting device.

22. A system according to any of claims 1 to 17, wherein said at least one shaft displacement member comprises a piston member (140) which has a stroke that changes in response to a signal from the detecting device.

23. A system according to any preceding claim having a conveyor (92) which carries the objects (W), said conveyor (92) being arranged adjacent to said moving members (42,110).

24. A system according to claim 23 wherein said moving members (42,110) divert the objects (W) transversely on the conveyor (32) while the moving members (42,110) are moving longitudinally along said control guide, and the objects (W) are sorted on the basis of their transverse positions on the conveyor (92).

25. A system according to any preceding claim wherein only the objects (W) which are determined as good articles are diverted in a transverse direction by the moving members (42,110).

26. A system according to any of claims 1 to 24 wherein only the objects (W) which are determined as defective articles are diverted in a transverse direction by the moving members (42,110).

27. A system according to any preceding claim wherein said control guide is formed on a bottom plate and said at least one shaft displacement member (78) pushes the shaft portion (44,112) of the moving member (42,11) vertically downwardly in response to a signal from a detecting device.

28. A system according to any of claims 1 to 26 wherein said control guide is formed on a top plate and said at least one shaft displacement member moves the shaft portion (44,112) of the moving member (42,110) vertically upwardly in the vertical direction in response to a signal from the detecting device.

29. A system according to any preceding claim wherein the conveying speed of the objects (W) and the moving speed of the moving members (42,110) are synchronised.

## Patentansprüche

1. Automatisches Sortiersystem zum Sortieren von Gegenständen (W), die in einer Maschinenrichtung gefördert werden, umfassend:
eine Steuerführung mit einer Nut (32, 100, 130), die sich in eine Mehrzahl von Zweigen (36, 38, 102, 104, 106, 132, 134, 136, 138) teilt, und bewegende Teile (42, 110) mit Schaftabschnitten (44, 11), die in die Steuerführung hineinreichen und von dieser geführt sind, wobei die bewegenden Teile (42, 110) Mittel (46) aufweisen, um die Gegenstände (W) in eine zu der Maschinenrichtung quer verlaufende Richtung abzulenken; **dadurch gekennzeichnet**, daß die Zweige stromaufwärtige Enden unterschiedlicher Tiefen aufweisen und wenigstens einer der Zweige an seinem stromaufwärtigen Ende einen Stufenabschnitt (35) aufweist, und daß wenigstens ein Schaftverschiebungsteil (78) vorgesehen ist, um die Schaftabschnitte (44, 112) der bewegenden Teile (42, 110) in Antwort auf Signale von einer Erfassungseinrichtung vertikal zu bewegen, wobei wenigstens ein Verschiebungsteil (78) stromaufwärts der Zweige angeordnet ist, so daß die Vertikalstellung, in die der Schaftabschnitt (44, 112) durch das Verschiebungsteil (78) bewegt wird, bestimmt, ob der Schaftabschnitt (44, 112) den Stufenabschnitt (35) berührt oder nicht, und somit bestimmt, welchem der Zweige (36, 38, 102, 104, 106, 132, 134, 136, 138) die Schaftabschnitte (44, 112) und ihre jeweiligen bewegenden Teile (42, 110) folgen.

2. System nach Anspruch 1 mit einem Verzweigungsabschnitt (34), in dem die Steuerführung (32) in nur zwei Zweige (36, 38) abzweigt.

3. System nach Anspruch 1 mit einem Verzweigungsabschnitt (108), in dem die Steuerführung in drei oder mehr Zweige (102, 104, 106) abzweigt.

4. System nach Anspruch 1 mit wenigstens zwei Verzweigungsabschnitten, in denen die Steuerführung in wenigstens zwei Zweige (132, 134, 136, 138) abzweigt.

5. System nach Anspruch 4 mit einer Mehrzahl von Schaftverschiebungsteilen (140).

6. System nach Anspruch 1, in dem die Zweige (36, 38) der Steuerführung in eine stromabwärtige Richtung zur Bildung einer Steuerführung aufeinander zu laufen.

7. System nach einem der vorhergehenden Ansprüche, in dem das Mittel zum Ablenken der Gegenstände (W) Stangen (46) umfaßt, die von den bewegenden Teilen (42, 110) quer abstehen.

8. System nach Anspruch 7, in dem Platten (150) zum Ablenken der Gegenstände (W) an Endabschnitten der Stangen (46) angebracht sind.

9. System nach Anspruch 7, in dem an den Endabschnitten der Stangen (46) ein elastisches Material angebracht ist.

10. System nach Anspruch 7, in dem an den Endabschnitten der Stangen (46) eine drehbare Rolle angebracht ist.

11. System nach Anspruch 7 mit flachen Platten (150) zum Tragen der zu sortierenden Gegenstände (W), und wobei die Stangen (46) Vorderendabschnitte aufweisen, die mit Rändern (151) der flachen Platten (150) in Kontakt stehen.

12. System nach Anspruch 11, weiter mit Mitteln (152) zum Vorspannen der flachen Platten (150) zu den Stangen (46) hin.

13. System nach Anspruch 7 mit flachen Platten (150) zum Tragen der zu sortierenden Gegenstände (W) und wobei die Stangen (46) der bewegenden Teile (42, 110) an den flachen Platten (150) befestigt sind.

14. System nach einem der Ansprüche 7 bis 13, in dem jedes bewegende Teil (42, 110) einen Hauptkörperabschnitt (48) aufweist, der mit der Stange (46) starr verbunden ist, und wobei die Schaftabschnitte (44, 112) den Hauptkörperabschnitt (48) gleitend durchdringen.

15. System nach einem der vorhergehenden Ansprüche, umfassend eine Kette (50, 52) mit Stiften (54, 56), welche von den Stangen (46) der bewegenden Teile (42, 110) gleitend durchdrungen sind, und wobei eine Mehrzahl von bewegenden Teilen (42, 110) sich gleichzeitig mit der Kette (50, 52) bewegt.

16. System nach Anspruch 15, in dem die Kette (50, 52) eine geräuscharme Kette ist.

17. System nach einem der Ansprüche 1 bis 14, umfassend einen Steuerriemen mit einem Drucklager, dessen Achse orthogonal zur Bewegungsrichtung des bewegenden Teils (42, 110) liegt.

18. System nach einem der vorhergehenden Ansprüche, in dem das wenigstens eine Schaftverschiebungsteil (78) einen Nocken (80) umfaßt, der eine Mehrzahl von Bögen unterschiedlicher Radien aufweist.

19. System nach Anspruch 18 mit einem Nockendrehmittel, das eine drehende Welle (82), ein Ritzel (88) an der drehenden Welle und eine Kette (86) umfaßt.

20. System nach Anspruch 19 mit einem Kupplungsmittel (90), welches den Nocken (80) in Antwort auf Signale von der Erfassungsvorrichtung drehend betätigt.

21. System nach Anspruch 18 mit einer Welle zur Drehung des Nockens (80), wobei ein Drehantriebsteil mit der drehenden Welle direkt gekoppelt ist und wobei das Drehantriebsteil in Antwort auf ein Signal von der Erfassungsvorrichtung betätigbar ist.

22. System nach einem der Ansprüche 1 bis 17, in dem das wenigstens eine Wellenverschiebungsteil ein Kolbenteil (140) umfaßt, dessen Hub sich in Antwort auf ein Signal von der Erfassungsvorrichtung ändert.

23. System nach einem der vorhergehenden Ansprüche mit einem Förderer (92), welcher die Gegenstände (W) trägt, wobei der Förderer (92) nahe den bewegenden Teilen (42, 110) angeordnet ist.

24. System nach Anspruch 23, in dem die bewegenden Teile (42, 110) die Gegenstände (W) quer auf dem Förderer (32) ablenken, während die bewegenden Teile (42, 110) in Längsrichtung entlang der Steuerführung bewegt werden, und wobei die Gegenstände (W) auf Basis ihrer Querpositionen auf dem Förderer (92) sortiert werden.

25. System nach einem der vorhergehenden Ansprüche, in dem nur diejenigen Gegenstände (W), die als gute Artikel bestimmt sind, von den bewegenden Teilen (42, 110) in eine Querrichtung abgelenkt werden.

26. System nach einem der Ansprüche 1 bis 24, in dem nur diejenigen Gegenstände (W), die als fehlerhafte Artikel bestimmt sind, von den bewegenden Teilen (42, 110) in eine Querrichtung abgelenkt werden.

27. System nach einem der vorhergehenden Ansprüche, in dem die Steuerführung auf einer Bodenplatte gebildet ist und wobei wenigstens ein Schaftverschiebungsteil (78) den Schaftabschnitt (44, 112) des bewegenden Teils (42, 110) in Antwort auf ein Signal von einer Erfassungsvorrichtung vertikal nach unten drückt.

28. System nach einem der Ansprüche 1 bis 26, in dem die Steuerführung auf einer Deckplatte gebildet ist und wobei wenigstens ein Schaftverschiebungsteil den Schaftabschnitt (44, 112) des bewegenden Teils (42, 110) in Antwort auf ein Signal von der Erfassungsvorrichtung in Vertikalrichtung vertikal nach oben bewegt.

29. System nach einem der vorhergehenden Ansprüche, in dem die Fördergeschwindigkeit der Gegenstände (W) und die Bewegungsgeschwindigkeit der bewegenden Teile (42, 110) synchronisiert sind.

## Revendications

1. Système de tri automatique pour trier des objets (W) qui sont transportés dans une direction de la machine, comprenant:
un guide de commande disposant d'une rainure (32, 100, 130) qui diverge en une pluralité de branches (36, 38, 102, 104, 106, 132, 134, 136, 138), et des éléments mobiles (42, 110) disposant de parties d'arbres (44, 11) qui s'étendent dans ledit guide de commande et qui dont guidés par celui-ci, lesdits éléments mobiles (42, 110) disposant de moyens (46) pour dévier les objets (W) dans une direction qui est transversale à ladite direction de la machine; caractérisé en ce que lesdites branches ont des extrémités amont de différentes profondeurs, et au moins une desdites branches a une partie étagée (35) dans son extrémité amont, et en ce que au moins un élément de déplacement d'arbre (78) est disposé pour déplacer les parties d'arbres (44, 112) des éléments mobiles (42, 110) verticalement en réponse aux signaux émis par un dispositif détecteur, ledit au moins un élément de déplacement d'arbre (78) étant placé en amont des branches de telle sorte que la position verticale vers laquelle la partie d'arbre (44, 112) se déplace par l'élément de déplacement (78) détermine si ladite partie d'arbre (44, 112) est au contact ou non ladite partie étagée (35) et détermine ainsi laquelle des branches (36, 38, 102, 104, 106, 132, 134, 136, 138) est suivie par les parties d'arbres (44, 112) et leurs éléments mobiles respectifs (42, 110).

2. Système selon la revendication 1, ayant une section de branchement (34) dans lequel ledit guide de commande (32) se sépare en seulement deux branches (36, 38).

3. Système selon la revendication 1, ayant une section de branchement (108) dans lequel ledit guide de commande se sépare en trois branches ou plus (102, 104, 106).

4. Système selon la revendication 1, ayant au moins deux sections de branchement dans lequel le guide de commande se sépare en au moins deux branches (132, 134, 136, 138).

5. Système selon la revendication 4 ayant une pluralité d'éléments de déplacement d'arbre (140).

6. Système selon la revendication 1 dans lequel lesdites branches (36, 38) du guide de commande convergent dans le sens aval pour former un guide de commande.

7. Système selon l'une quelconque des revendications précédentes, dans lequel les moyens pour dévier les objets (W) comprennent des tiges (46) qui partent transversalement depuis les éléments mobiles (42, 110).

8. Système selon la revendication 7, dans lequel les plaques (150) pour dévier les objets (W) sont fixées aux parties d'extrémité des tiges (46).

9. Système selon la revendication 7, dans lequel un matériau élastique est fixé aux parties d'extrémité des tiges(46).

10. Système selon la revendication 7, dans lequel un rouleau pouvant tourner est fixé aux parties d'extrémité des tiges(46).

11. Système selon la revendication 7 ayant des plaques plates (150) pour supporter les objets (W) triés, et des tiges (46) dont les parties d'extrémité avant sont en contact avec les bords (151) desdites plaques plates (150).

12. Système selon la revendication 11, disposant en outre de moyens (152) pour orienter les dites plaques plates (150) vers les tiges (46).

13. Système selon la revendication 7 disposant de plaques plates (150) pour transporter les objets (W) triés, et dans lequel les tiges (46) desdits éléments mobiles (42, 110) sont fixées auxdites plaques plates (150).

14. Système selon l'une quelconque des revendications 7 à 13 dans lequel chaque élément mobile (42, 110) comprend une partie de corps principal (48) qui est reliée rigidement à la tige (46), et dans lequel lesdites parties d'arbre (44, 112) pénètrent par glissement dans ladite partie de corps principal (48).

15. Système selon l'une quelconque des revendications précédentes, ayant une chaîne (50, 52) qui a des goupilles (54, 56) dans lesquelles pénètrent par glissement les tiges (46) des éléments mobiles (42, 110), et une pluralité d'éléments mobiles (42, 110) qui se déplacent simultanément avec ladite chaîne (50, 52).

16. Système selon la revendication 15, dans lequel ladite chaîne (50, 52) est une chaîne silencieuse.

17. Système selon l'une quelconque des revendications 1 à 14, disposant d'une courroie de synchronisation comprenant un palier de butée dont l'axe est perpendiculaire à la direction du déplacement dudit élément mobile (42, 110).

18. Système selon l'une quelconque des revendications précédentes, dans lequel ledit au moins un élément de déplacement d'arbre (78) comprend une came (80) qui dispose d'une pluralité d'arcs de différents rayons.

19. Système selon la revendication 18 ayant un moyen formant came rotative qui comprend un arbre de rotation (82), une dent de pignon (88) sur l'arbre de rotation, et une chaîne (86).

20. Système selon la revendication 19 comprenant un moyen formant embrayage (90) qui fonctionne pour faire tourner la came (80) en réponse à des signaux émis par le dispositif de détection.

21. Système selon la revendication 18, ayant un arbre de rotation qui fait tourner la came (80), un élément d'entraînement en rotation directement couplé avec ledit arbre de rotation, ledit élément d'entraînement en rotation pouvant fonctionner en réponse à un signal émis par le dispositif de détection.

22. Système selon l'une quelconque des revendications 1 à 17, dans lequel ledit au moins un élément de déplacement d'arbre comprend un élément à piston (140) dont la course change en réponse à un signal émis par le dispositif de détection.

23. Système selon l'une quelconque des revendications précédentes disposant d'un transporteur (92) qui porte les objets (W), ledit transporteur (92) étant voisin desdits éléments mobiles (42, 110).

24. Système selon la revendication 23 dans lequel lesdits éléments mobiles (42, 110) dévient les objets (W) transversalement sur le transporteur (32) pendant que les éléments mobiles (42, 110) se déplacent longitudinalement le long dudit guide de contrôle, et dans lequel les objets (W) sont triés sur la base de leurs positions transversales sur le transporteur (92).

25. Système selon l'une quelconque des revendications précédentes dans lequel seuls les objets (W) qui sont identifiés comme de bons articles sont déviés dans une direction transversale par les éléments mobiles (42, 110).

26. Système selon l'une quelconque des revendications 1 à 24 dans lequel seuls les objets (W) qui sont identifiés comme des articles défectueux sont déviés dans une direction transversale par les éléments mobiles (42, 110).

27. Système selon l'une quelconque des revendications précédentes dans lequel ledit guide de commande est disposé sur une plaque inférieure et ledit au moins un élément de déplacement d'arbre (78) pousse la partie d'arbre (44, 112) de l'élément mobile (42, 110) verticalement vers le bas en réponse à un signal émis par le dispositif de détection.

28. Système selon l'une quelconque des revendications 1 à 26 dans lequel le guide de commande est disposé sur une plaque supérieure et ledit au moins un élément de déplacement d'arbre pousse la partie d'arbre (44, 112) de l'élément mobile (42, 110) verticalement vers le haut en réponse à un signal émis par le dispositif de détection.

29. Système selon l'une quelconque des revendications précédentes dans lequel la vitesse de transport des objets (W) et la vitesse de déplacement des éléments mobiles (42, 110) sont synchronisées.
